# EUROPEAN PATENT APPLICATION

(11) **EP 4 835 456 A1**
(43) Date of publication of application: **04.11.2026**
(21) Application number: 24910641.0
(22) Date of filing: 06.12.2024
(51) Int. Cl.: G01N 23/046, G01V 5/226

(54) **CT DEVICE**

(30) Priority: 28.12.2023 CN 202311837728
(71) Applicant: Nuctech Company Limited, TongFang Building Shuangqinglu Haidian District Beijing 100084 (CN); Tsinghua University, Beijing 100084 (CN)
(72) Inventor: CHEN, Zhiqiang, Beijing 100084 (CN); ZHANG, Li, Beijing 100084 (CN); LI, Yuanjing, Beijing 100084 (CN); HUANG, Qingping, Beijing 100084 (CN); FENG, Bo, Beijing 100084 (CN); ZHANG, Liguo, Beijing 100084 (CN); LI, Guipei, Beijing 100084 (CN)
(74) Representative: Winter, Brandl - Partnerschaft mbB
(86) International application number: PCT/CN2024/137461
(87) International publication number: WO 2025/139709

(57) **Abstract**

Provided is a CT device, related to the field of radiation scanning technology. The CT device includes: a rack; support apparatuses disposed on the rack; a rotatable portion configured to be rotatable about a rotation axis under driving of a driving roller, and the rotatable portion is jointly supported by the support apparatuses during rotation of the rotatable portion; a scanning apparatus disposed on the rotatable portion, and the scanning apparatus is configured to scan an object to be inspected; and an axial limiting mechanism including a first pressing roller set and a second pressing roller set respectively disposed on end surfaces of two sides of the rotatable portion in a direction of the rotation axis. Each of the first pressing roller set and the second pressing roller set includes n pressing rollers, n is an integer greater than 3, and at least a portion of an outer peripheral surface of any one of the pressing rollers is in contact with the end surface of the rotatable portion, so as to limit a movement of the rotatable portion in the direction of the rotation axis.

## Description

This application claims priority to Chinese Patent Application No. 202311837728.5 filed on December 28, 2023, the entire contents of which is incorporated herein by reference.

### TECHNICAL FIELD

The present disclosure relates to the field of radiation inspection technology, and in particular to a CT device.

### BACKGROUND

The CT technology plays an important role in the security inspection due to its ability to eliminate the effect of object overlap. CT devices are also widely used in technical fields such as article inspection. The CT devices may inspect not only relatively small articles such as baggage and air containers, but also larger articles such as containers and vehicles.

In the related art, a CT device uses a slip ring apparatus to acquire projection data from different angles through rotation of an X-ray machine and a detector, and acquires tomographic images by a reconstruction method, thereby obtaining internal information of inspected baggage and articles. Combined with dual-energy or multi-energy imaging technology, current baggage and article inspection devices may reconstruct atomic number and electron density of an inspected substance, thereby achieving substance identification. This has achieved good effects in detection of explosives, hazardous goods, and the like.

For example, in the related art, when a rotatable portion of a CT device is supported by a support apparatus, during rotation, the rotatable portion may generate displacement along a direction of a rotation axis. When the displacement is relatively large and the rotatable portion rotates at a relatively high speed, a vibration of the CT device is caused, which affects an imaging accuracy of the CT device.

The above information disclosed in this section is only for understanding of the background of the inventive concept of the present disclosure, and therefore, the above information may include information that does not constitute the related art.

### SUMMARY

According to an aspect of the present disclosure, a CT device is provided, including: a rack; a support apparatus disposed on the rack, the support apparatus includes a plurality of rotating rollers, and at least one rotating roller of the support apparatus is configured as a driving roller; a rotatable portion configured to be rotatable about a rotation axis under driving of the driving roller, the rotatable portion is jointly supported by a plurality of support apparatuses during rotation of the rotatable portion; a scanning apparatus disposed on the rotatable portion, the scanning apparatus is configured to scan an object to be inspected; and an axial limiting mechanism including a first pressing roller set and a second pressing roller set respectively disposed on end surfaces of two sides of the rotatable portion in a direction of the rotation axis. Each of the first pressing roller set and the second pressing roller set includes n pressing rollers, n is an integer greater than 3, and at least a portion of an outer peripheral surface of any one of the pressing rollers is in contact with the end surface of the rotatable portion, so as to limit a movement of the rotatable portion in the direction of the rotation axis.

According to some exemplary embodiments of the present disclosure, one of the first pressing roller set and the second pressing roller set includes an eccentric pressing roller set, and the other of the first pressing roller set and the second pressing roller set includes an axial pressing roller set; or each of the first pressing roller set and the second pressing roller set is an axial pressing roller set; or each of the first pressing roller set and the second pressing roller set is an eccentric pressing roller set.

According to some exemplary embodiments of the present disclosure, in a direction parallel to the rotation axis, the rotatable portion sequentially includes a first rotation rail, a rotatable portion body, and a second rotation rail; and in the direction parallel to the rotation axis, the first pressing roller set is disposed on a side of the first rotation rail away from the rotatable portion body, and the second pressing roller set is disposed on a side of the second rotation rail away from the rotatable portion body.

According to some exemplary embodiments of the present disclosure, each of the axial pressing roller set and the eccentric pressing roller set includes: a fixing base, a connecting rod, a first bearing, a rotating shaft, a roller seat, a roller axle, a second bearing, a first pressing roller element, and a second pressing roller element; the fixing base is fixedly connected to the rack, an outer race of the first bearing is fixed on the fixing base, the rotating shaft is fixedly connected to an inner race of the first bearing, and the connecting rod is disposed on the rotating shaft; and the roller seat is disposed on each of two ends of the connecting rod, the roller axle is fixed on the roller seat at each end of the connecting rod, the first pressing roller element is disposed on the roller axle through the second bearing, and the second pressing roller element is disposed on the roller axle through the second bearing.

According to some exemplary embodiments of the present disclosure, the first pressing roller element and the second pressing roller element are symmetrically disposed on the connecting rod with respect to a center of the rotatable portion.

According to some exemplary embodiments of the present disclosure, the fixing base is symmetrically provided with two screw holes on each of two sides of a center of the rotatable portion, and the fixing base is fixedly connected to the rack through mounting bolts mounted in the two screw holes.

According to some exemplary embodiments of the present disclosure, in the axial pressing roller set, each of the first pressing roller element and the second pressing roller element includes at least two axial pressing rollers sequentially stacked in a direction of the roller axle.

According to some exemplary embodiments of the present disclosure, in the axial pressing roller set, a central axe of each of the first pressing roller element and the second pressing roller element coincides with a central axis of the roller axle, each of the first pressing roller element and the second pressing roller element rotates on the roller axle, and a minimum distance a in the direction of the rotation axis between at least a portion of an outer peripheral surface of any axial pressing roller and an end surface of any rotation rail remains constant.

According to some exemplary embodiments of the present disclosure, in the eccentric pressing roller set, each of the first pressing roller element and the second pressing roller element includes at least two eccentric pressing rollers sequentially stacked in a direction of the roller axle.

According to some exemplary embodiments of the present disclosure, in the eccentric pressing roller set, the roller axle is an eccentric shaft, each of central axes of the first pressing roller element and the second pressing roller element does not coincide with a central axis of the roller axle, each of the first pressing roller element and the second pressing roller element rotates eccentrically on the roller axle, and a minimum distance b in the direction of the rotation axis between at least a portion of an outer peripheral surface of any eccentric pressing roller and an end surface of any rotation rail is variable.

According to some exemplary embodiments of the present disclosure, the minimum distance a and the minimum distance b jointly adjust the movement of the rotatable portion in the direction of the rotation axis.

According to some exemplary embodiments of the present disclosure, in the eccentric pressing roller set, the rotating shaft is configured as an eccentric rotating shaft, the rotating shaft is fixed to the inner race of the first bearing, and the inner race of the first bearing cooperates with the eccentric rotating shaft such that the connecting rod rotates eccentrically; and each of the first pressing roller element and the second pressing roller element includes at least two axial pressing rollers sequentially stacked in a direction of the roller axle.

According to some exemplary embodiments of the present disclosure, the eccentric pressing roller set further includes: the fixing base is symmetrically provided with elongated holes extending in the direction of the rotation axis on two sides of the center of the rotatable portion, and the fixing base 221 is movable along the elongated holes.

According to some exemplary embodiments of the present disclosure, a pressing roller surface of any of the first pressing roller element and the second pressing roller element is a cylindrical surface.

A part of additional aspects and advantages of the present disclosure will be provided in the following description, and other parts of which will become apparent through the following description or may be learned through practice of the present disclosure.

### BRIEF DESCRIPTION OF THE DRAWINGS

For a better understanding of the present disclosure, the present disclosure will be described in detail with reference to the following drawings:
FIG. 1 is a front view of a CT device according to some exemplary embodiments of the present disclosure;
FIG. 2 is a side view of a CT device according to some exemplary embodiments of the present disclosure;
FIG. 3 is a front view of a rotatable portion of a CT device according to some exemplary embodiments of the present disclosure;
FIG. 4 is a side view of a rotatable portion of a CT device according to some exemplary embodiments of the present disclosure;
FIG. 5A is a structural schematic view of an axial pressing roller set of a CT device according to some exemplary embodiments of the present disclosure;
FIG. 5B is a structural schematic view of an axial pressing roller set of a CT device taken along section A-A along a central axis of a connecting rod according to some exemplary embodiments of the present disclosure;
FIG. 5C is a partial structural schematic view of a pressing roller element in an axial pressing roller set of a CT device according to some exemplary embodiments of the present disclosure;
FIG. 6A is a structural schematic view of an eccentric pressing roller set of a CT device according to some exemplary embodiments of the present disclosure;
FIG. 6B is a partial structural schematic view of a pressing roller element in an eccentric pressing roller set of a CT device according to some exemplary embodiments of the present disclosure;
FIG. 7 is a partial structural schematic view of a connection between a fixing base and a rack in another eccentric pressing roller set of a CT device according to some exemplary embodiments of the present disclosure; and
FIG. 8 is a structural schematic view of a magnetic apparatus of a CT device according to another exemplary embodiment of the present disclosure.

### DETAILED DESCRIPTION OF EMBODIMENTS

Specific embodiments of the present disclosure will be described in detail below. It should be noted that the embodiments described here are only for illustration and are not intended to limit the present disclosure. In the following description, numerous specific details are set forth to provide a thorough understanding of the present disclosure. However, it will be apparent to those of ordinary skill in the art that these specific details are not necessarily needed to be employed to practice the present disclosure. In other instances, well-known structures, materials, or methods are not described in detail to avoid obscuring the present disclosure.

Throughout the entire specification, reference to "an embodiment", "embodiments," "an example" or "examples" means that a particular feature, structure, or characteristic described in connection with the embodiment or example is included in at least one embodiment of the present disclosure. Thus, appearances of the phrases "in an embodiment", "in embodiments", "an example" or "examples" in various places throughout the entire specification are not necessarily all referring to the same embodiment or example. Furthermore, the particular features, structures, or characteristics may be combined in any suitable combination and/or sub-combination in one or more embodiments or examples. Moreover, those of ordinary skill in the art should understand that the term "and/or" as used here includes any and all combinations of one or more of the associated listed items.

The terminology used here is for the purpose of describing particular embodiments only and is not intended to limit the present disclosure. As used here, the terms "comprise", "include" and the like indicate the presence of features, steps, operations, and/or components, but do not preclude the presence or addition of one or more other features, steps, operations, or components.

All terms (including technical and scientific terms) used here have the meanings commonly understood by those of ordinary skill in the art, unless otherwise defined. It should be noted that the terms used here should be interpreted as having meanings consistent with the context of the specification, and should not be interpreted in an idealized or overly rigid manner.

In the related art, when a rotatable portion of a CT device is supported by a support apparatus, the rotatable portion may generate a displacement in a direction of a rotation axis during rotation. When the displacement is relatively large and the rotatable portion rotates at a relatively high speed, a vibration of the CT device is caused, which affects an imaging accuracy of the CT device.

To address such issues, a related distributed bearing CT device uses two sets of fixed axial pressing rollers as an axial constraint for an imaging system under high-speed rotation. A related axial limiting structure adopts a fixed structure. To ensure that each of the two sets of pressing roller sets may contact an end surface of the imaging system, requirements for accuracy of machining, such as a flatness of the end surface of the imaging system, a position of a radial support roller, a cylindricity of an axial support roller, etc, are high. Although controlling the above parameters may improve a roller-rail contact, manufacturing costs may be increased. In most cases, the two sets of roller sets simultaneously contacting the end surfaces of the imaging system may still not be ensured, and the axial pressing rollers are in single-point contact with the end surface of the imaging system. The single-point contact on the end surface of the imaging system under high-speed rotation may lead to the following problems: a rotation center position changes, exacerbating wobbling; and the single-point contact may lead to faster wear of roller made of a polymer material.

In view of this, the embodiments of the present disclosure provide a CT device, including: a rack; a support apparatus disposed on the rack, the support apparatus including a plurality of rotating rollers, and at least one rotating roller of the support apparatus serves as a driving roller; a rotatable portion configured to be rotatable about a rotation axis under driving of the driving roller, and the rotatable portion is jointly supported by a plurality of support apparatuses during rotation of the rotatable portion; a scanning apparatus disposed on the rotatable portion, and the scanning apparatus is configured to scan an object to be inspected; and an axial limiting mechanism, including a first pressing roller set and a second pressing roller set respectively disposed on end surfaces of two sides of the rotatable portion in a direction of the rotation axis. Each of the first pressing roller set and the second pressing roller set includes n pressing rollers, where n is an integer greater than 3, and at least a portion of an outer peripheral surface of any one of the pressing rollers contacts the end surface of the rotatable portion, so as to limit a movement of the rotatable portion in the direction of the rotation axis.

During high-speed rotation imaging of the rotatable portion, a displacement in the direction of the rotation axis may be generated. A plurality of pressing rollers in the first pressing roller set and the second pressing roller set respectively disposed on end surfaces of two sides of the rotatable portion may form multi-point contact with rotation rails in the rotatable portion. It should be noted that, to avoid the problem of faster roller wear caused by a single-point contact, each of the first pressing roller set and the second pressing roller set includes at least more than 3 pressing rollers. In this case, the first pressing roller set and the second pressing roller set may jointly adaptively adjust the displacement of the rotatable portion to limit wobbling of the rotatable portion.

Through the embodiments of the present disclosure, it may be effectively ensured that two sides of the axial end surfaces of the rotatable portion may form multi-point contact with the plurality of pressing rollers in the pressing roller sets, thereby reducing wear of individual pressing rollers and also facilitating the device operation noise reduction. Furthermore, a positional stability of the rotatable portion is ensured, enabling a more accurate CT device imaging while prolonging a service life of the device.

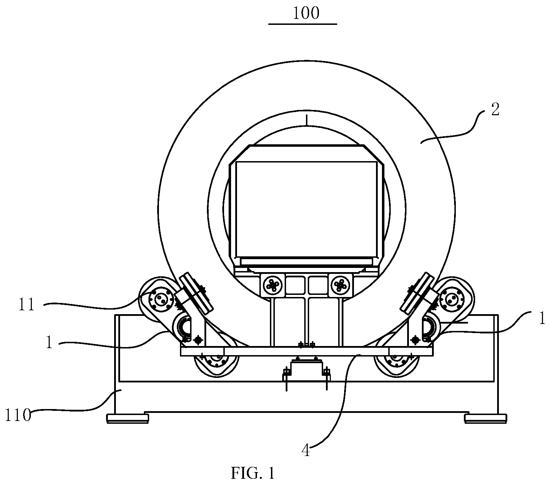

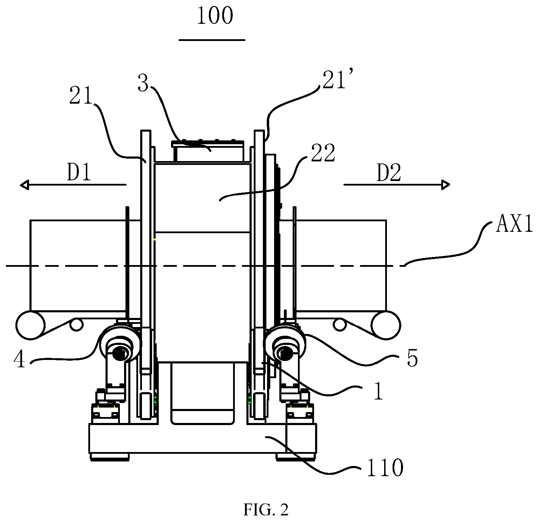

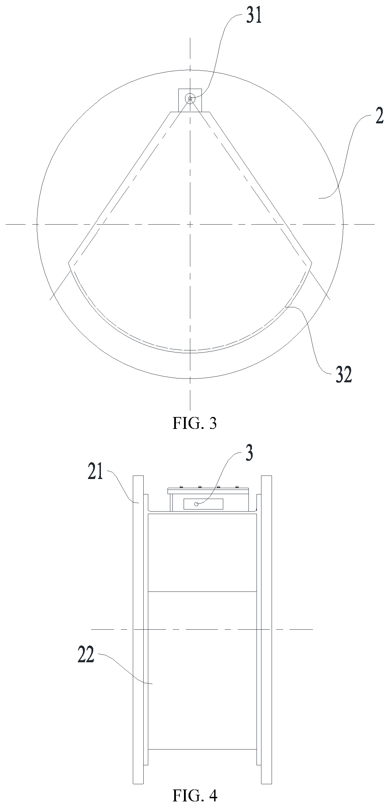

FIG. 1 is a front view of a CT device according to some exemplary embodiments of the present disclosure. FIG. 2 is a side view of a CT device according to some exemplary embodiments of the present disclosure. FIG. 3 is a front view of a rotatable portion of a CT device according to some exemplary embodiments of the present disclosure. FIG. 4 is a side view of a rotatable portion of a CT device according to some exemplary embodiments of the present disclosure.

The CT device according to the embodiments of the present disclosure will be described in detail below with reference to FIG. 1 to FIG. 4.

As shown in FIG. 1 to FIG. 4, a CT device 100 includes a rack 110, a support apparatus 1, a rotatable portion 2, a scanning apparatus 3, and an axial limiting mechanism including a first pressing roller set 4 and a second pressing roller set 5.

The rack 110 is used to support the CT device 100. The support apparatus 1 is disposed on the rack 110. A plurality of support apparatuses 1 may be provided. For example, two support apparatuses may be disposed opposite to each other on a first side edge close to a lower side of the rack, and two support apparatuses may be disposed opposite to each other on a second side close to the lower side of the rack, and the second side is opposite to the first side edge. The support apparatuses 1 are used to support the rotatable portion 2.

The support apparatus 1 includes a plurality of rotating rollers 11, and at least one rotating roller 11 of at least one support apparatus 1 serves as a driving roller. For example, as shown in FIG. 1, a rotating roller 11 of the support apparatus 1 is connected to a drive motor, and the rotating roller 11 serves as a driving roller.

The rotatable portion 2 is rotatable about a rotation axis AX1 under driving of the driving roller. During rotation of the rotatable portion 2, the rotatable portion 2 is jointly supported by the plurality of support apparatuses 1.

As shown in FIG. 3 and FIG. 4, the scanning apparatus 3 includes a radiation source 31 and a detector 32. The radiation source 31 and the detector 32 are both disposed on the rotatable portion 2, and the radiation source 31 and the detector 32 are disposed opposite to each other in a radial direction of the rotatable portion 2. For example, the radiation source 31 is disposed on a first circumferential side of the rotatable portion, and the detector 32 is disposed on a circumferential second side opposite to the first circumferential side. Centers of gravity of the radiation source 31 and the detector 32 lie on the rotation axis AX1, thereby ensuring that vibration does not occur when the rotatable portion drives the radiation source 31 and the detector 32 to rotate.

As shown in FIG. 2, in a direction parallel to the rotation axis AX1, the rotatable portion 2 sequentially includes a first rotation rail 21, a rotatable portion body 22, and a second rotation rail 21'. The rotatable portion body 22 is interposed between the two rotation rails. The scanning apparatus 3 is disposed on the rotatable portion body 22. In the direction parallel to the rotation axis AX1, the first pressing roller set 4 and the second pressing roller set 5 are respectively disposed on end surfaces of two sides of the rotatable portion 2.

When the rotatable portion 2 of the CT device is jointly supported by the plurality of support apparatuses 1, the rotatable portion 2 may rotate about the rotation axis under driving of the driving roller. During high-speed rotation imaging of the rotatable portion 2, a displacement of the rotatable portion 2 may occur in the direction of the rotation axis, which may cause vibration of the CT device.

In this case, the plurality of pressing rollers on the first pressing roller set 4 are in contact with the first rotation rail 21 of the rotatable portion 2, thereby limiting a movement of the rotatable portion 2 in a first direction D1. The plurality of pressing rollers on the second pressing roller set 5 are in contact with the second rotation rail 21' of the rotatable portion 2, thereby limiting a movement of the rotatable portion 2 in a second direction D2. As shown in FIG. 2, the first direction D1 and the second direction D2 are both parallel to the rotation axis AX1, and the first direction D1 is opposite to the second direction D2. In this way, the rotatable portion 2 may remain stable during high-speed rotation, thereby reducing wobbling.

In some exemplary embodiments of the present disclosure, one of the first pressing roller set and the second pressing roller set includes an eccentric pressing roller set, and the other includes an axial pressing roller set. For example, the first pressing roller set 4 is an eccentric pressing roller set and the second pressing roller set 5 is an axial pressing roller set; or the first pressing roller set 4 is an axial pressing roller set and the second pressing roller set 5 is an eccentric pressing roller set.

For example, as shown in FIG. 2, the arrangement positions of the two pressing roller sets are as follows: in the direction parallel to the rotation axis AX1, the first pressing roller set 4 (e.g., the axial pressing roller set) is disposed on a side of the first rotation rail 21 away from the rotatable portion body 22, and the second pressing roller set 5 (e.g., the eccentric pressing roller set) is disposed on a side of the second rotation rail 21' away from the rotatable portion body 22.

In other embodiments, the first pressing roller set and the second pressing roller set may both be eccentric pressing roller sets, or may both be axial pressing roller sets.

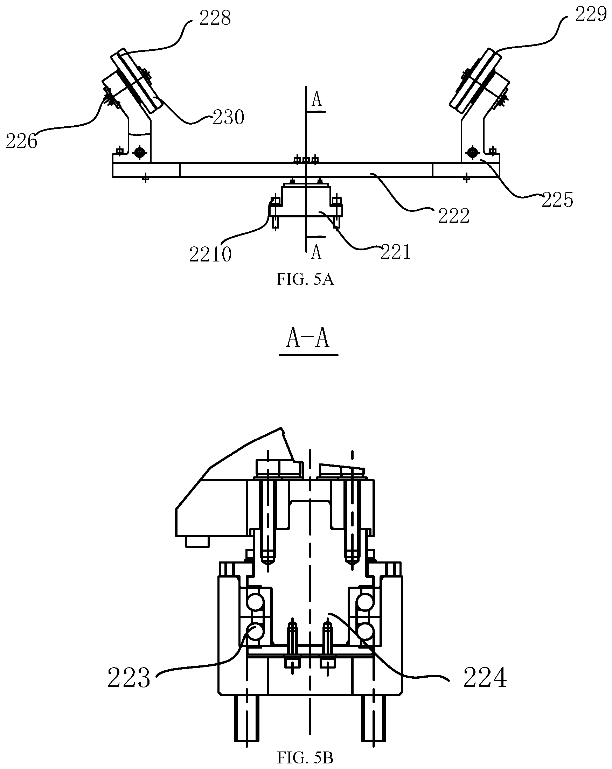

An implementation of the CT device according to the embodiments of the present disclosure will be described in detail below with reference to FIG. 5A to FIG. 6B, in which an axial pressing roller set and an eccentric pressing roller set are respectively disposed on the end surfaces of the two sides of the rotatable portion.

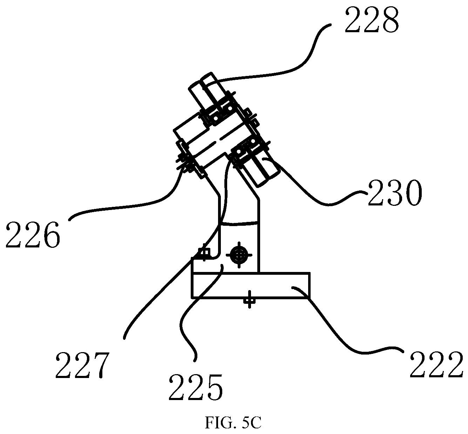

FIG. 5A is a structural schematic view of an axial pressing roller set of a CT device according to some exemplary embodiments of the present disclosure. FIG. 5B is a structural schematic view of an axial pressing roller set of a CT device taken along section A-A along a central axis of a connecting rod according to some exemplary embodiments of the present disclosure. FIG. 5C is a partial structural schematic view of a pressing roller element in an axial pressing roller set of a CT device according to some exemplary embodiments of the present disclosure.

As shown in FIG. 5A to FIG. 5C, the first pressing roller set 4 (e.g., the axial pressing roller set) includes: a fixing base 221, a connecting rod 222, a first bearing 223, a rotating shaft 224, a roller seat 225, a roller axle 226, a second bearing 227, a first pressing roller element 228, and a second pressing roller element 229.

The fixing base 221 is fixedly connected to the rack 110. An outer race of the first bearing 223 is fixed on the fixing base 221. The rotating shaft 224 is fixed to an inner race of the first bearing 223. The connecting rod 222 is disposed on the rotating shaft 224.

The roller seat 225 is disposed on each of two ends of the connecting rod 222. At each end of the connecting rod 222, the roller axle 226 is fixed on the roller seat 225. The first pressing roller element 228 is disposed on the roller axle 226 through the second bearing 227, and the second pressing roller element 229 is disposed on the roller axle 226 through the second bearing 227.

During rotation of the rotatable portion, when a displacement of the rotatable portion is generated in the direction of the rotation axis, the rotation rails of the rotatable portion may be in contact with the axial pressing rollers on the first pressing roller element and the second pressing roller element in the axial pressing roller set, and a thrust may be generated. The first pressing roller element and the second pressing roller element may rotate about the central rotating shaft of the connecting rod in a plane parallel to the rotation axis, thereby adaptively adjusting the displacement of the rotatable portion and limiting the wobbling of the rotatable portion.

Continuing to refer to FIG. 5A, the first pressing roller element 228 and the second pressing roller element 229 are symmetrically disposed on the connecting rod with respect to a center of the rotatable portion.

In the axial pressing roller set, by symmetrically disposing the first pressing roller element and the second pressing roller element at two ends of the connecting rod, the connecting rod may be kept rotating about its central rotating shaft, thereby adaptively adjusting the displacement of the rotatable portion.

As shown in FIG. 5C, in the axial pressing roller set, each of the first pressing roller element 228 and the second pressing roller element 229 includes at least two axial pressing rollers 230 sequentially stacked in a direction of the roller axle.

For example, a surface of any pressing roller of the first pressing roller element 228 and the second pressing roller element 229 may be a cylindrical surface.

It should be noted that, in the axial pressing roller set, each of central axes of the first pressing roller element 228 and the second pressing roller element 229 coincides with a central axis of the roller axle 226. Each of the first pressing roller element 228 and the second pressing roller element 229 rotates on the roller axle 226. A minimum distance a in the direction of the rotation axis between at least a portion of an outer peripheral surface of any axial pressing roller 230 and an end surface of any rotation rail remains constant.

It may be understood that, when a displacement of the rotatable portion is generated in the direction of the rotation axis during rotation, a thrust may be generated by the contact between the rotation rail and the axial pressing roller, causing the axial pressing roller to rotate about the roller axle, thereby causing the connecting rod to rotate about its central rotating shaft. In this case, the minimum distances between the outer peripheral surface of any pressing roller at two ends of the connecting rod and the rotation rail have the same value.

In some exemplary embodiments of the present disclosure, as shown in FIG. 5A, the fixing base 221 is symmetrically provided with two screw holes on each of two sides of a center of the rotatable portion 2, and the fixing base 221 is fixedly connected to the rack 110 by mounting bolts 2210 mounted in the two screw holes.

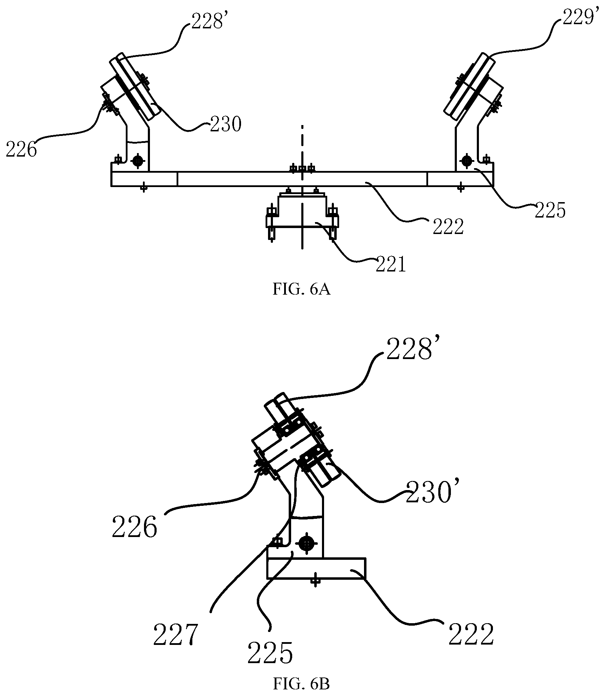

FIG. 6A is a structural schematic view of an eccentric pressing roller set of a CT device according to some exemplary embodiments of the present disclosure. FIG. 6B is a partial structural schematic view of a pressing roller element in an eccentric pressing roller set of a CT device according to some exemplary embodiments of the present disclosure.

As shown in FIG. 6A and FIG. 6B, the second pressing roller set 5 (e.g., the eccentric pressing roller set) includes: a fixing base 221, a connecting rod 222, a first bearing 223, a rotating shaft 224, a roller seat 225, a roller axle 226, a second bearing 227, a first pressing roller element 228', and a second pressing roller element 229'.

The fixing base 221 is fixedly connected to the rack 110. An outer race of the first bearing 223 is fixed on the fixing base 221. The rotating shaft 224 is fixed to an inner race of the first bearing 223. The connecting rod 222 is disposed on the rotating shaft 224. The inner race of the first bearing 223 cooperates with the rotating shaft 224 to cause the connecting rod 222 to rotate.

The roller seat 225 is disposed on two ends of the connecting rod 222. At each end of the connecting rod 222, the roller axle 226 is fixed on the roller seat 225. The first pressing roller element 228' is disposed on the roller axle 226 through the second bearing 227, and the second pressing roller element 229' is disposed on the roller axle 226 through the second bearing 227.

Continuing to refer to FIG. 6A, the first pressing roller element 228' and the second pressing roller element 229' are symmetrically disposed on the connecting rod with respect to the center of the rotatable portion.

Continuing to refer to FIG. 6B, in the eccentric pressing roller set, each of the first pressing roller element 228' and the second pressing roller element 229' includes at least two eccentric pressing rollers 230' sequentially stacked in the direction of the roller axle.

That is, in the eccentric pressing roller set, because the roller axle 226 is an eccentric shaft, each of central axes of the first pressing roller element 228' and the second pressing roller element 229' does not coincide with a central axis of the roller axle 226, and the eccentric pressing rollers 230' on the first pressing roller element 228' and the second pressing roller element 229' rotate eccentrically on the roller axle 226.

It may be understood that, when a displacement of the rotatable portion is generated in the direction of the rotation axis during rotation, the rotation rails may be in contact with the eccentric pressing rollers and a thrust may be generated, causing the eccentric pressing roller to rotate, thereby causing the connecting rod to rotate about its central rotating shaft in the plane parallel to the rotation axis. However, since the roller axle is the eccentric shaft, the eccentric pressing roller may not rotate about the roller axle, but instead perform eccentric movement under action of the thrust. Therefore, a minimum distance b in the direction of the rotation axis between at least a portion of an outer peripheral surface of any eccentric pressing roller and an end surface of any rotation rail is variable.

In the above description, in the CT device in the embodiments of the present disclosure, an axial pressing roller set and an eccentric pressing roller set are respectively disposed on the end surfaces of two sides of the rotatable portion. When a displacement of the rotatable portion is generated in the direction of the rotation axis during rotation, the rotation rails may be in contact with the pressing rollers in the pressing roller sets on the two sides, causing the eccentric pressing roller set and the axial pressing roller set to rotate about the connecting rod. In this case, the minimum distance a in the direction of the rotation axis between at least a portion of an outer peripheral surface of the axial pressing roller and an end surface of any rotation rail, as well as the minimum distance b in the direction of the rotation axis between at least a portion of an outer peripheral surface of any eccentric pressing roller and an end surface of any rotation rail jointly adjust and limit the displacement movement of the rotatable portion in the direction of the rotation axis. This may effectively ensure that the two sides of the axial end surfaces of the rotatable portion form multi-point contact with the pressing roller sets, ensuring positional uniqueness of the rotatable portion, enabling accurate CT device imaging, prolonging service life of the apparatus, and also facilitating an apparatus operating noise reduction.

In other embodiments, a specific implementation of providing the rotating shaft in the eccentric pressing roller set as an eccentric rotating shaft is as follows.

The eccentric pressing roller set further includes: the rotating shaft 224 is configured as an eccentric rotating shaft, the rotating shaft 224 is fixed to the inner race of the first bearing 223, the inner race of the first bearing 223 cooperates with the eccentric rotating shaft such that the connecting rod rotates eccentrically, the roller seat 225 is disposed on two ends of the connecting rod 222. At each end of the connecting rod 222, the roller axle 226 is fixed on the roller seat 225, the first pressing roller element 228' is disposed on the roller axle 226 through the second bearing 227, and the second pressing roller element 229' is disposed on the roller axle 226 through the second bearing 227.

It should be noted that, in this case, each of the first pressing roller element 228' and the second pressing roller element 229' includes at least two axial pressing rollers 230 sequentially stacked in the direction of the roller axle.

It may be understood that, when the rotating shaft in the eccentric pressing roller set is configured as an eccentric shaft, and a displacement of the rotatable portion is generated in the direction of the rotation axis during rotation, the rotation rails may be in contact with the axial pressing rollers and a thrust may be generated, causing the connecting rod to rotate eccentrically in the plane parallel to the rotation axis. In this case, a minimum distance b' in the direction of the rotation axis between at least a portion of an outer peripheral surface of any axial pressing roller and an end surface of any rotation rail is variable.

Through the embodiments of the present disclosure, by configuring the rotating shaft in the eccentric pressing roller set as the eccentric shaft, and the distance to the axial pressing roller set may be adjusted, thereby jointly and effectively limiting the displacement movement of the rotatable portion in the direction of the rotation axis.

In other embodiments, another specific implementation of the eccentric pressing roller set is as follows.

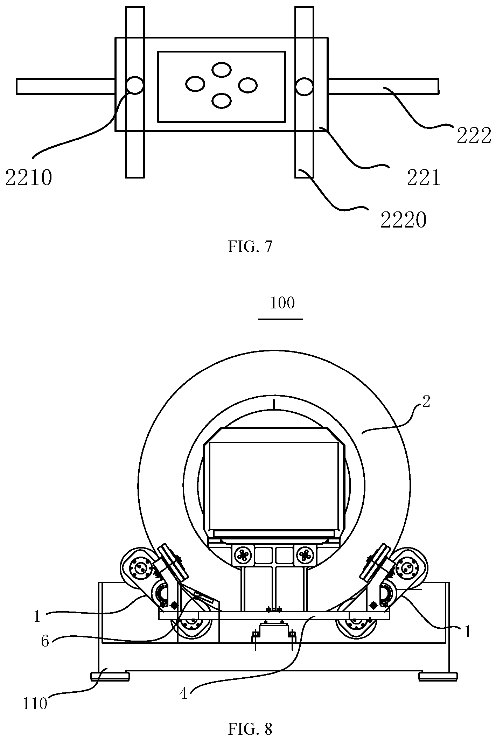

FIG. 7 is a partial structural schematic view of a connection between a fixing base and a rack in another eccentric pressing roller set of a CT device according to some exemplary embodiments of the present disclosure.

Referring to FIG. 5A and FIG. 7 in combination, the outer race of the first bearing 223 is fixed on the fixing base 221, the rotating shaft 224 is fixed to the inner race of the first bearing 223, the connecting rod 222 is disposed on the rotating shaft 224, and the inner race of the first bearing 223 cooperates with the rotating shaft 224 to cause the connecting rod 222 to rotate. The fixing base 221 is fixedly connected to the rack 110 in a manner as follows: the fixing base 221 is symmetrically provided with elongated holes 2220 extending in the direction of the rotation axis on two sides of the center of the rotatable portion, and the fixing base 221 is movable along the elongated holes through the mounting bolts 2210.

It should be noted that, in this case, each pressing roller element includes at least two axial pressing rollers sequentially stacked in the direction of the roller axle.

It may be understood that, when a displacement of the rotatable portion is generated in the direction of the rotation axis during rotation, the rotation rails may be in contact with the axial pressing rollers and a thrust may be generated, and the eccentric pressing roller set may move in the direction of the rotation axis within the preset mounting elongated holes as the fixing base moves. In this case, the distance between the eccentric pressing roller set and the axial pressing roller set may be adjusted, thereby jointly and effectively limiting the displacement movement of the rotatable portion in the direction of the rotation axis.

According to the embodiments of the present disclosure, during operation of the CT device, a group of self-adaptive roller sets is disposed on each of the end surfaces of the two sides of the imaging system, ensuring that the two sides of the axial end surfaces of the imaging system may form multi-point contact with the pressing roller sets, thus guaranteeing the positional uniqueness of the imaging system. This enables accurate imaging, prolonging the service life of the CT device, and also facilitating the apparatus operating noise reduction.

FIG. 8 is a structural schematic view of a magnetic apparatus of a CT device according to another exemplary embodiment of the present disclosure.

As shown in FIG. 8, the CT device 100 further includes a magnetic apparatus 6. The magnetic apparatus 6 is disposed on the rack 110 and is used to provide a magnetic attraction force to the rotatable portion 2 during rotation of the rotatable portion 2, so as to apply the rotatable portion 2 with an adsorption force to toward the rack 110.

Exemplarily, the magnetic apparatus 6 includes a plurality of permanent magnets or electromagnets. The plurality of permanent magnets or electromagnets are spaced apart from each other on the rack in the rotation direction of the rotatable portion 2.

Exemplarily, the plurality of permanent magnets or electromagnets are spaced apart at uniform intervals on the rack in the rotation direction of the rotatable portion. For example, the plurality of permanent magnets are disposed on the rack along an outer circumference on which the rotatable portion rotates, specifically, in a lower region of the rack or in other regions of the rack.

As shown in FIG. 3 and FIG. 4, the rotatable portion 2 includes a rotatable body 22 and two rotation rails. The scanning apparatus 31 is disposed on the rotatable body 22. In some embodiments, the rotation rails include a magnetic material. In some alternative embodiments, a magnetic portion including a magnetic material is mounted on an outer peripheral surface of the rotation rail. The magnetic portion and the magnetic apparatus may mutually attract with each other, thereby applying the rotatable portion 2 with an adsorption force toward the rack 110.

In the description of the specification, reference to the terms "an embodiment", "some embodiments", "illustrative embodiments", "an example", "a specific example" or "some examples" means that a specific feature, structure, material, or characteristic described in connection with the embodiment or example is included in at least one embodiment or example of the present disclosure. In the specification, the schematic representations of the above terms do not necessarily refer to the same embodiment or example. Furthermore, the described specific feature, structure, material, or characteristic may be combined in any suitable manner in any one or more embodiments or examples.

Although the embodiments of the present disclosure have been shown and described, those of ordinary skill in the art will appreciate that various changes, modifications, substitutions, and variations may be made to these embodiments without departing from the principles and spirit of the present disclosure. The scope of the present disclosure is defined by the claims and their equivalents. It will be appreciated by those skilled in the art that, the features described in the various embodiments and/or claims of the present disclosure may be combined and/or incorporated in various manners, even if such combinations or incorporations are not explicitly recited in the present disclosure. In particular, the features described in the various embodiments and/or claims of the present disclosure may be combined and/or incorporated in various manners without departing from the spirit and teachings of the present disclosure. All such combinations and/or incorporations fall within the scope of the present disclosure.

## Claims

1. A CT device, comprising:
a rack;
a support apparatus disposed on the rack, wherein the support apparatus comprises a plurality of rotating rollers, and at least one rotating roller of the support apparatus is configured as a driving roller;
a rotatable portion configured to be rotatable about a rotation axis under driving of the driving roller, wherein the rotatable portion is jointly supported by a plurality of support apparatuses during rotation of the rotatable portion;
a scanning apparatus disposed on the rotatable portion, wherein the scanning apparatus is configured to scan an object to be inspected; and
an axial limiting mechanism comprising a first pressing roller set and a second pressing roller set respectively disposed on end surfaces of two sides of the rotatable portion in a direction of the rotation axis,
wherein each of the first pressing roller set and the second pressing roller set comprises n pressing rollers, n is an integer greater than 3, and at least a portion of an outer peripheral surface of any one of the pressing rollers is in contact with the end surface of the rotatable portion, so as to limit a movement of the rotatable portion in the direction of the rotation axis.

2. The CT device according to claim 1, wherein,
one of the first pressing roller set and the second pressing roller set comprises an eccentric pressing roller set, and the other of the first pressing roller set and the second pressing roller set comprises an axial pressing roller set; or
each of the first pressing roller set and the second pressing roller set is an axial pressing roller set; or
each of the first pressing roller set and the second pressing roller set is an eccentric pressing roller set.

3. The CT device according to claim 2, wherein,
in a direction parallel to the rotation axis, the rotatable portion sequentially comprises a first rotation rail, a rotatable portion body, and a second rotation rail; and
in the direction parallel to the rotation axis, the first pressing roller set is disposed on a side of the first rotation rail away from the rotatable portion body, and the second pressing roller set is disposed on a side of the second rotation rail away from the rotatable portion body.

4. The CT device according to claim 3, wherein,
each of the axial pressing roller set and the eccentric pressing roller set comprises: a fixing base, a connecting rod, a first bearing, a rotating shaft, a roller seat, a roller axle, a second bearing, a first pressing roller element, and a second pressing roller element;
the fixing base is fixedly connected to the rack, an outer race of the first bearing is fixed on the fixing base, the rotating shaft is fixedly connected to an inner race of the first bearing, and the connecting rod is disposed on the rotating shaft; and
the roller seat is disposed on each of two ends of the connecting rod, the roller axle is fixed on the roller seat at each end of the connecting rod, the first pressing roller element is disposed on the roller axle through the second bearing, and the second pressing roller element is disposed on the roller axle through the second bearing.

5. The CT device according to claim 4, wherein the first pressing roller element and the second pressing roller element are symmetrically disposed on the connecting rod with respect to a center of the rotatable portion.

6. The CT device according to claim 4, wherein the fixing base is symmetrically provided with two screw holes on each of two sides of a center of the rotatable portion, and the fixing base is fixedly connected to the rack through mounting bolts mounted in the two screw holes.

7. The CT device according to claim 4, wherein in the axial pressing roller set, each of the first pressing roller element and the second pressing roller element comprises at least two axial pressing rollers sequentially stacked in a direction of the roller axle.

8. The CT device according to claim 7, wherein in the axial pressing roller set, a central axe of each of the first pressing roller element and the second pressing roller element coincides with a central axis of the roller axle, each of the first pressing roller element and the second pressing roller element rotates on the roller axle, and a minimum distance a in the direction of the rotation axis between at least a portion of an outer peripheral surface of any axial pressing roller and an end surface of any rotation rail remains constant.

9. The CT device according to claim 4, wherein in the eccentric pressing roller set, each of the first pressing roller element and the second pressing roller element comprises at least two eccentric pressing rollers sequentially stacked in a direction of the roller axle.

10. The CT device according to claim 9, wherein in the eccentric pressing roller set, the roller axle is an eccentric shaft, each of central axes of the first pressing roller element and the second pressing roller element does not coincide with a central axis of the roller axle, each of the first pressing roller element and the second pressing roller element rotates eccentrically on the roller axle, and a minimum distance b in the direction of the rotation axis between at least a portion of an outer peripheral surface of any eccentric pressing roller and an end surface of any rotation rail is variable.

11. The CT device according to claim 10, wherein the minimum distance a and the minimum distance b jointly adjust the movement of the rotatable portion in the direction of the rotation axis.

12. The CT device according to claim 4, wherein in the eccentric pressing roller set,
the rotating shaft is configured as an eccentric rotating shaft, the rotating shaft is fixed to the inner race of the first bearing, and the inner race of the first bearing cooperates with the eccentric rotating shaft such that the connecting rod rotates eccentrically; and
each of the first pressing roller element and the second pressing roller element comprises at least two axial pressing rollers sequentially stacked in a direction of the roller axle.

13. The CT device according to claim 6, wherein the eccentric pressing roller set further comprises: the fixing base is symmetrically provided with elongated holes extending in the direction of the rotation axis on two sides of the center of the rotatable portion, and the fixing base 221 is movable along the elongated holes.

14. The CT device according to claim 4, wherein a pressing roller surface of any of the first pressing roller element and the second pressing roller element is a cylindrical surface.
